# EUROPÄISCHE PATENTSCHRIFT

(11) **EP 1 331 363 B1**
(45) Veröffentlichungstag und Bekanntmachung des Hinweises auf die Patenterteilung: **27.07.2005**
(21) Anmeldenummer: 03001083.9
(22) Anmeldetag: 18.01.2003
(51) Int. Cl.: F01D 21/04, F02C 7/06, F16C 19/52

(54) **Drehlagerung mit einer Sollbruchstelle**
Rotational bearing with a predetermined breaking point
Palier rotatif avec zone de rupture

(30) Priorität: 26.01.2002 DE 10202977
(43) Veröffentlichungstag der Anmeldung: 30.07.2003
(73) Patentinhaber: MTU Aero Engines GmbH, 80995 München (DE)
(72) Erfinder: Wöhrl, Bernhard, Dr., 82131 Gauting (DE)

(56) Entgegenhaltungen:
- EP-A- 1 013 896
- US-A- 4 289 360
- US-A- 4 668 105
- US-A- 6 009 701

## Beschreibung

Die Erfindung betrifft eine Drehlagerung mit einer Sollbruchstelle gemäß der im Oberbegriff des Anspruchs 1 angegebenen Art.

Bekanntlich weist ein Rotor einer Strömungsmaschine, beispielsweise der Rotor eines Strahltriebwerks eines Flugzeuges, als Drehlagerung mehrere Wälzlager auf. Diese Lager stützen den umlaufenden Rotor gegenüber dem stillstehenden Teil, z. B. dem Gehäuse, in radialer oder in radialer und axialer Richtung ab und leiten dabei die auf die Drehlagerung wirkenden Lagerkräfte in das Gehäuse ein.

Nachteilig dabei ist, dass auch unvorhergesehen hohe, auf die Drehlagerung wirkende Lagerbeanspruchungen in das Gehäuse eingeleitet werden, was eine Zerstörung des Gehäuses verursachen kann. So können beispielsweise in Strahltriebwerken eines Flugzeugs Vogelschlag oder Schaufelresonanz einen sogenannten Schaufelbruch am Rotor herbeiführen. Das Kollidieren des abgebrochenen Schaufelstücks mit nachfolgenden Schaufeln des Rotors und das geänderte dynamische Verhalten des Rotors bewirken in der Regel eine drastische Erhöhung der Lagerkräfte, die über das Gehäuse in die Triebwerksaufhängung eingeleitet werden. Dies kann zu einer Zerstörung der Triebwerksaufhängung oder zu Schäden an der Flugzeugzelle führen.

Die US-A-6 009 701 schützt eine Drehlagerung mit einer Sollbruchstelle für ein Gasturbinentriebwerk. Ein als Rollenlager (19) ausgeführtes Drehlager ist mit seinem äußeren Lagerring (20) in einem Flanschring (21) radial und axial fixiert. Zwischen dem Flanschring (21) und einer diesen tragenden, statischen Struktur (22) ist eine bei Überlast brechende Sollbruchstelle in Form eines in zwei axial fluchtenden Rechtecknuten (30, 31) gehaltenen Sollbruchringes (29) vorhanden. Bei Bruch dieses Ringes wird der Flanschring (21) mit dem Drehlager radial in Grenzen beweglich, so dass Kraftstöße durch Reibung bzw. Verformung abgebaut werden. Über eine spezielle Vorrichtung (39, 41) nach Art einer elastischen Gewindeverbindung wird der nach Sollbruch exzentrisch laufende Rotor automatisch wieder zentriert. Die gesamte Anordnung erfordert eine Vielzahl von passgenauen Teilen und ist daher aufwändig, teuer und störanfällig.

Die US-A-4 289 360 betrifft eine Drehlagerung mit Sollbruchstelle für ein Gasturbinentriebwerk, wobei die Sollbruchstelle mit einer geraden Anzahl von paarweise axial fluchtenden Scherbolzen (46, 48) mit Kerben (49, 51) realisiert ist. Die über den Lagerumfang verteilten Scherbolzen sind radial außerhalb des äußeren Lagerrings (36) in separaten Ringen (42, 44) gehalten, durchdringen weitere statische Bauteile (20, 22) und sind mit Muttern vorgespannt. Nach Bruch der Scherbolzen wird die radiale Lagerbewegung durch Festkörper- und Flüssigkeitsreibung (Öl) gedämpft. Auch diese Lösung erfordert eine Vielzahl passgenauer Teile und ist somit aufwändig, teuer und störanfällig.

Der Erfindung liegt demgegenüber die Aufgabe zugrunde, eine Drehlagerung mit einer Sollbruchstelle nach dem Sollbruchring-Prinzip derart weiterzubilden, dass sich eine besonders einfache, preiswerte und zuverlässige Konstruktion ergibt.

Diese Aufgabe wird durch die kennzeichnenden Merkmale des Anspruches 1 in Verbindung mit seinen Oberbegriffsmerkmalen gelöst.

Nach der Erfindung ist in der ersten Berührungsebene und in der in zweiten Berührungsebene zwischen Lagerträgergehäuse einerseits und äußerem Lagerring des Drehlagers andererseits die unter vorbestimmter Beanspruchung brechende, konzentrisch zur Drehachse angeordnete Sollbruchstelle in Form zweier Sollbruchringe realisiert, die in paarweise axial fluchtende Nuten im Lagerträgergehäuse und im Lagerring eingreifen.

Die erste und zweite Berührungsebene sind dabei zueinander parallel sowie senkrecht zur Drehachse ausgerichtet.

Die direkte Verbindung von Lagerring und Trägergehäuse reduziert die Anzahl der erforderlichen Teile und Passungen und bewirkt einen günstigen Kraftfluss. Das Vorhandensein zweier Sollbruchringe erhöht die Sicherheit bei ungewolltem Versagen eines Ringes im Sinne einer Redundanz.

Um die Bruchkraft der Sollbruchringe genauer zu definieren, weisen beide Sollbruchringe vorzugsweise jeweils eine radial äußere und eine radial innere Ringnut auf.

Weitere Merkmale der Erfindung ergeben sich aus den Unteransprüchen.

Die Erfindung ist nachfolgend anhand eines in der Zeichnung mehr oder minder schematisch dargestellten Ausführungsbeispiel beschrieben. Es zeigen:
- Fig. 1: eine Schnittdarstellung einer ersten Stufe eines Strahltriebwerks mit der erfindungsgemäß ausgeführten Drehlagerung mit einer Sollbruchstelle;
- Fig. 2: eine vergrößerte Darstellung der vorderen Drehlagerung mit der Sollbruchstelle aus Fig. 1;
- Fig. 3: die Sollbruchstelle aus Fig. 2 nach Bruch von Sollbruchringen;
- Fig. 4: eine Schnittdarstellung eines Sollbruchrings, und
- Fig. 5: eine Schnittdarstellung einer weiteren Ausführungsform eines Sollbruchrings.

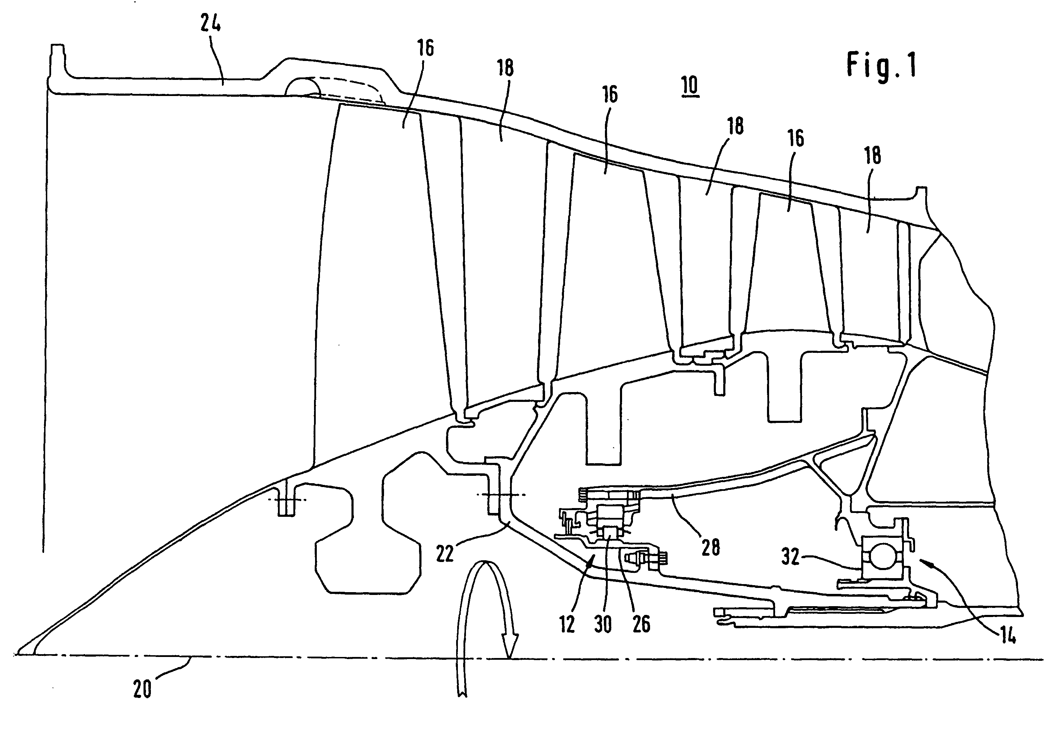

Ein in Fig. 1 insgesamt mit der Bezugsziffer 10 bezeichnete erste Stufe eines Strahltriebwerks weist eine vorderer Drehlagerung 12 mit einer Sollbruchstelle und eine hintere Drehlagerung 14 auf.

Die erste Stufe des Strahltriebwerks 10 umfasst mehrere Laufschaufeln 16 und Leitschaufeln 18. Die Laufschaufeln 16 sind dabei lösbar mit einem um eine Drehachse 20 rotierenden Rotor 22 und die Leitschaufel 18 mit einem umgebenden Gehäuse 24 verbunden.

Die vordere Drehlagerung 12 weist zwischen einem mit dem rotierenden Rotor 22 lösbar verbundenen Lagerträger 26 und einem mit dem umgebenden Gehäuse 24 verbundenen nicht-rotierenden Lagerträgergehäuse 28 ein Drehlager 30 auf. Das nicht-rotierende Lagerträgergehäuse 28 hat dabei einen Gehäuseinnendurchmesser 31. Im vorliegenden Ausführungsbeispiel ist das Drehlager 30 der vorderen Drehlagerung 12 ein Wälzlager der Rollenbauweise.

In der hinteren Drehlagerung 14, auf die nicht weiter Bezug genommen wird, weist als Drehlager 32 ein Wälzlager in Kugelbauweise auf.

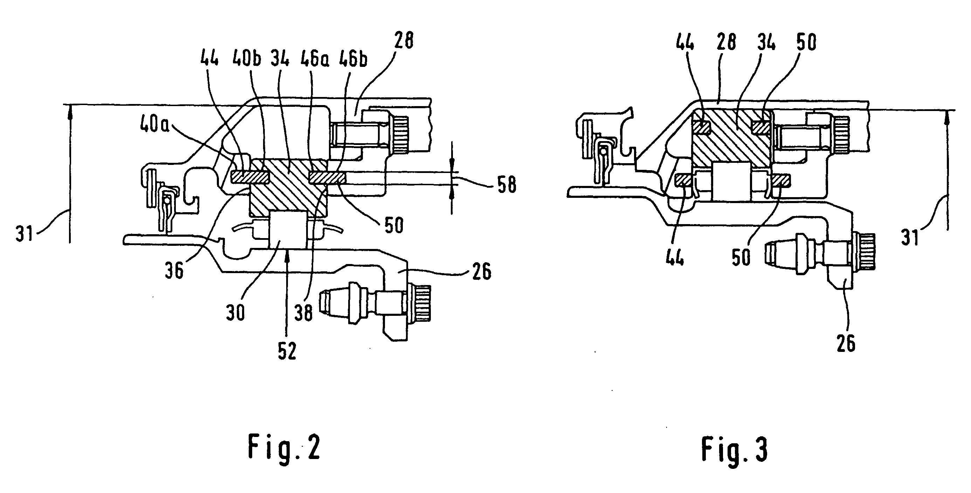

Wie Fig. 2 zeigt, ist das Drehlager 30 mit einem äußeren Lagering 34 versehen, der über eine erste Berührungsebene 36 und eine zweite Berührungsebene 38 axial und radial fest mit dem Lagerträgergehäuse 28 verbunden ist. Die erste und zweite Berührungsebene 36 und 38 sind senkrecht zur Drehachse 20 ausgerichtet.

Für die radiale Fixierung des äußeren Lagerings 34 über die erste Berührungsebene 36 mit dem Lagerträgergehäuse 28 ist in das Lagerträgergehäuse 28 eine erste Nut 40a konzentrisch zur Drehachse 20 eingebracht. In den äußeren Lagerring 34 ist eine entsprechende, der ersten Nut gegenüberliegende zweite Nut 40b konzentrisch zur Drehachse 20 eingearbeitet. In die beiden Nuten 40a und 40b ist ein erster Sollbruchring 44 eingebracht.

Die Fixierung über die zweite Berührungsebene 38 hinweg ist identisch der ersten Berührungsebene 36 aufgebaut. In das Lagerträgergehäuse 28 ist eine erste Nut 46a und in den äußeren Lagerring 34 eine zweite Nut 46b eingebracht. In den durch die beiden Nuten 46a und 46b gebildeten zweiten Hohlraum 48 ist ein zweiter Sollbruchring 50 eingebracht.

Die in den Berührungsebenen 36 und 38 liegenden Ränder der Nuten 40a und 40b sowie 46a und 46b sind dabei jeweils scharfkantig ausgeführt.

Der Kraftfluss einer von dem Rotor 22 über den Lagerträger 26 in das Drehlager eingeleiteten radialen Belastung 52 erfolgt über die Sollbruchringe 44 und 50 in das Lagerträgergehäuse 28.

Liegt nun eine überhöhte radiale Belastung 52, beispielsweise durch Schaufelbruch, vor, so führt dies zum Bruch bzw. Abscheren der Sollbruchringe 44 und 50.

Wie Fig. 3 zeigt, erfolgt nach Bruch der Sollbruchringe 44 und 50 eine radiale Versschiebung des Lagerträger 26 und des Drehlagers 30 mit seinem äußeren Lagering 34 entsprechend der Kraftrichtung der radialen Belastung 52.

Der Gehäuseinnendurchmesser 31 ist dabei so dimensioniert, dass das Drehlager 30 noch eine gewisse Stützwirkung für den Lagerträger 26 und somit den Rotor 22 aufweist, um eine unkontrollierte Gleitreibung zwischen rotierenden und nicht-rotierenden Teilen zu verhindern. Der Abbau der verbleibende Rotationsenergie des im Gehäuse 24 taumelnden Rotors 22 erfolgt durch die "kontrollierte" Zerstörung der Lauf- und Leitschaufel 16 und 18.

Um weiterreichende Zerstörungen zu vermeiden, erfolgt nach Bruch der Sollbruchringe 44, 50 eine sofortige Unterbrechung der Treibstoffzufuhr des Strahltriebwerk. Zum Erfassen des Bruchs der Sollbruchringe 44, 50 sind hier nicht dargestellte Sensoren bei den Berührebenen 36, 38 vorgesehen, die mit einer Steuer- und/oder Regeleinrichtung zusammenwirken, die nach Bruch der Sollbruchringe 44, 50 die Treibstoffzufuhr des Strahltriebwerks sofort unterbricht.

Die Sollbruchringe umfassen eine Ringdicke d. Jeweils in axialer Richtung beträgt die Tiefe in dem äußeren Lagerring 34 der gegenüberliegenden Nuten 40a, 40b und 46a, 46b das Zwei- bis Zehnfache der Ringdicke d.

Im vorliegenden Ausführungsbeispiel sind die Sollbruchringe 44, 50 aus einem sprödbrechenden Material, vorzugsweise aus unelastischem keramischem Werkstoff, gefertigt. Alternativ hierzu können die Sollbruchringe auch aus einem gehärteten Federstahl oder anderen Materialien mit enger Bruchcharakteristik gefertigt sein.

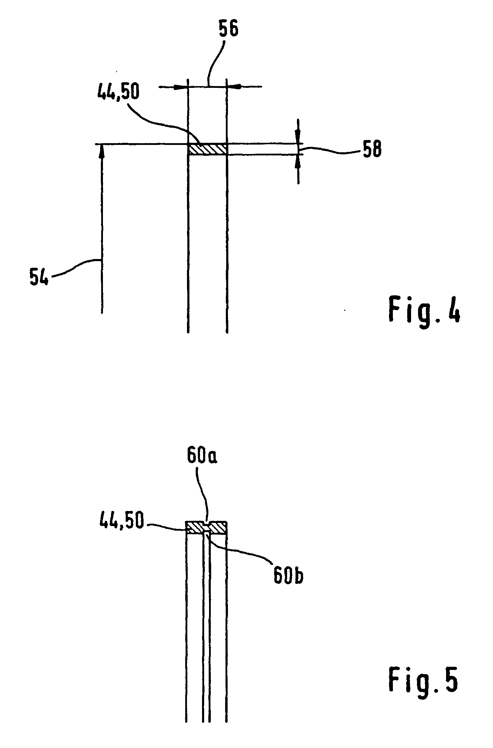

Fig. 4 zeigt eine einfache Ausführung eines solchen Sollbruchrings 44, 50. In der einfachen Ausführung weist der Sollbruchring 44, 50 einen Durchmesser 54, eine Breite 56 und eine Dicke 58 auf. Die benötigte Scherfestigkeit der Sollbruchringe 44 und 50, also die vorbestimmte Beanspruchung die zum Bruch der Sollbruchringe 44, 50 führen soll, kann anhand des Durchmessers 54, der Breite 56, der Dicke 58 und den Materialkennwerten bestimmt werden.

Im Gegensatz zu dem in Fig. 4 dargestellten Sollbruchrings 44, 50 weist der in Fig. 5 gezeigte Sollbruchring 44, 50 zusätzlich eine Ringnut 60 a, 60 b auf. Das Vorsehen der Ringnut 60 a, 60 b hat den Vorteil, dass die Scherfestigkeit der Sollbruchringe 44, 50 genauer bestimmt werden kann.

## Patentansprüche

1. Drehlagerung (12) mit einer Sollbruchstelle, insbesondere für einen Rotor (22) einer Strömungsmaschine, mit einem zwischen einem nicht-rotierenden Lagerträgergehäuse (28) und einem um eine Drehachse (20) rotierenden Lagerträger (26) angeordneten Drehlager (30), wobei das Drehlager (30) mit seinem äußeren Lagerring (34) in dem nicht-rotierenden Lagerträgergehäuse (28) radial und axial fixiert ist, und wobei die Sollbruchstelle einen konzentrisch zur Drehachse (20) angeordneten, in zwei axial gegenüberliegende Nuten eingreifenden und unter vorbestimmter Beanspruchung brechenden Sollbruchring umfasst, **dadurch gekennzeichnet, dass** ausgehend von zwei parallelen, senkrecht zur Drehachse (20) ausgerichteten Berührungsebenen (36, 38) des äußeren Lagerrings (34) mit dem Lagerträgergehäuse (28) konzentrisch zur Drehachse (20) angeordnete, paarweise axial fluchtende Nuten (40a, 40b und 46a, 46b) in das Lagerträgergehäuse (28) und den äußeren Lagerring (34) eingebracht sind, und dass der Sollbruchring (44) und ein zweiter Sollbruchring (50) mit jeweils definierter Ringdicke (58), jeweils in den ausgehend von zwei parallelen, senkrecht zur Drehachse (20) ausgerichteten Berührungsebenen (36, 38) des äußeren Lagerrings, paarweise axial fluchtenden Nuten (40a, 40b und 46a, 46b) gehalten sind.

2. Drehlagerung nach Anspruch 1, **dadurch gekennzeichnet, dass** jeweils in axialer Richtung die Tiefe der paarweise gegenüberliegenden Nuten (40a, 40b und 46a, 46b) das Zwei- bis Zehnfache der Ringdicke (58) beträgt.

3. Drehlagerung nach Anspruch 1 oder 2, **dadurch gekennzeichnet, dass** die Nuten (40a, 40b und 46a, 46b) jeweils scharfkantig ausgeführte Ränder aufweisen.

4. Drehlagerung nach einem der vorangehenden Ansprüche, **dadurch gekennzeichnet, dass** die Sollbruchringe (44, 50) aus einem sprödbrechenden Material, insbesondere aus einem gehärteten Federstahl oder einem unelastischen keramischen Werkstoff, ausgeführt sind.

5. Drehlagerung nach einem der vorangehenden Ansprüche, **dadurch gekennzeichnet, dass** beide Sollbruchringe (44, 50) jeweils eine radial äußere und eine radial innere Ringnut (60a, 60b) aufweisen.

6. Drehlagerung nach einem der vorangehenden Ansprüche, **dadurch gekennzeichnet, dass** Sensoren vorgesehen sind, die den Bruch der Sollbruchringe (44, 50) erfassen und mit einer Steuer- und/oder Regeleinrichtung in der Weise zusammenwirken, dass nach Bruch der Sollbruchringe (44, 50) eine sofortige Unterbrechung der Treibstoffzufuhr erfolgt.

7. Drehlagerung nach einem der vorangehenden Ansprüche, **dadurch gekennzeichnet, dass** das Drehlager (30) als Rollenlager ausgebildet ist.

## Claims

1. Rotational bearing arrangement (12) having a predetermined breaking point, in particular for a rotor (22) of a turbo-machine, having a rotational bearing (30) that is arranged between a non-rotating bearing-carrier housing (28) and a bearing carrier (26) that rotates about a rotational axis (20), with the rotational bearing (30) being radially and axially fixed with its outer bearing ring (34) in the non-rotating bearing-carrier housing (28), and with the predetermined breaking point comprising a predeterminedly breaking ring that is arranged concentrically in relation to the rotational axis (20), engages into two grooves lying axially opposite each other and breaks under predetermined stress, **characterised in that** starting from two parallel planes of contact (36, 38) of the outer bearing ring (34) with the bearing-carrier housing (28) that are orientated perpendicularly in relation to the axis of rotation (20) grooves (40a, 40b and 46a, 46b) that are arranged concentrically in relation to the rotational axis (20) and are aligned axially in pairs are introduced into the bearing-carrier housing (28) and the outer bearing ring (34), and **in that** the predeterminedly breaking ring (44) and a second predeterminedly breaking ring (50), in each case having a defined ring thickness (58), are in each case held in the grooves (40a, 40b and 46a, 46b) that are aligned axially in pairs starting from two parallel planes of contact (36, 38) of the outer bearing ring that are orientated perpendicularly in relation to the axis of rotation (20).

2. Rotational bearing arrangement according to claim 1, **characterised in that** in each case in the axial direction the depth of the grooves (40a, 40b and 46a, 46b) that lie opposite each other in pairs amounts to twice to ten times the ring thickness (58).

3. Rotational bearing arrangement according to claim 1 or 2, **characterised in that** the grooves (40a, 40b and 46a, 46b) each have borders that are constructed with sharp edges.

4. Rotational bearing arrangement according to one of the preceding claims, **characterised in that** the predeterminedly breaking rings (44, 50) are constructed from a material that is susceptible to brittle fracture, in particular from a hardened spring steel or an inelastic ceramic material.

5. Rotational bearing arrangement according to one of the preceding claims, **characterised in that** both predeterminedly breaking rings (44, 50) each have a radially outer and a radially inner ring groove (60a, 60b).

6. Rotational bearing arrangement according to one of the preceding claims, **characterised in that** sensors are provided that detect the break of the predeterminedly breaking rings (44, 50) and cooperate with a control and/or regulating device in such a way that after breakage of the predeterminedly breaking rings (44, 50) an immediate interruption of the supply of fuel takes place.

7. Rotational bearing arrangement according to one of the preceding claims, **characterised in that** the rotational bearing (30) is formed as a roller bearing.

## Revendications

1. Logement de palier rotatif (12) avec un point de rupture, notamment pour un rotor (22) d'une turbomachine, comprenant un palier rotatif (30) disposé entre un boîtier support de palier (28) non rotatif et un support de palier (26) en rotation autour d'un axe de rotation (20), le palier rotatif (30) étant fixé radialement et axialement par sa bague de palier extérieure (34) dans le boîtier support de palier (28) non rotatif, et le point de rupture comprenant une bague destinée à la rupture disposée concentriquement à l'axe de rotation (20), s'engageant dans deux rainures axialement opposées et se rompant lors d'une sollicitation prédéterminée,
**caractérisé en ce que**
partant de deux plans de contact (36, 38) parallèles et perpendiculaires à l'axe de rotation (20) de la bague de palier extérieure (34) avec le boîtier support de palier (28), des rainures (40a, 40b et 46a, 46b) disposées concentriquement à l'axe de rotation (20) et alignées axialement par paires sont insérées dans le boîtier support de palier (28) et la bague de palier extérieure (34), et la bague de rupture (44) et une deuxième bague de rupture (50) d'une épaisseur de bague (58) définie sont maintenues dans les rainures (40a, 40b et 46a, 46b) alignées axialement par paires, partant de deux plans de contact (36, 38) parallèles qui s'étendent perpendiculairement à l'axe de rotation (20) de la bague de palier extérieure.

2. Logement de palier selon la revendication 1,
**caractérisé en ce que**
la profondeur axiale des rainures (40a, 40b et 46a, 46b) disposées par paires les unes face aux autres fait de deux à dix fois l'épaisseur de bague (58).

3. Logement de palier selon la revendication 1 ou 2,
**caractérisé en ce que**
les rainures (40a, 40b et 46a, 46b) présentent chacune des bords à arêtes vives.

4. Logement de palier selon l'une quelconque des revendications précédentes,
**caractérisé en ce que**
les bagues de rupture (44, 50) sont réalisées à partir d'un matériau à rupture fragile, notamment d'un acier à ressort trempé ou d'un matériau céramique non élastique.

5. Logement de palier selon l'une quelconque des revendications précédentes,
**caractérisé en ce que**
les deux bagues de rupture (44, 50) présentent chacune une rainure annulaire radialement extérieure et radialement intérieure (60a, 60b).

6. Logement de palier selon l'une quelconque des revendications précédentes,
**caractérisé en ce que**
des capteurs détectent la rupture des bagues de rupture (44, 50) et coopèrent avec un dispositif de commande et/ou de régulation pour couper l'alimentation en combustible immédiatement après la rupture des bagues (44, 50).

7. Logement de palier selon l'une quelconque des revendications précédentes,
**caractérisé en ce que**
le palier rotatif (30) a la forme d'un roulement à rouleaux.
